# EUROPEAN PATENT SPECIFICATION

(11) **EP 1 036 953 B1**
(45) Date of publication and mention of the grant of the patent: **14.07.2004**
(21) Application number: 00301813.2
(22) Date of filing: 06.03.2000
(51) Int. Cl.: F16G 13/04

(54) **Silent chain**
Zahnkette
Chaîne à dents

(30) Priority: 16.03.1999 JP 6962399
(43) Date of publication of application: 20.09.2000
(73) Proprietor: BorgWarner Morse TEC Japan K.K., Nabari City Mie-Prefecture 518-0495 (JP)
(72) Inventor: Tada, Naosumi, Nabari, Mie 518-0495 (JP); Matsuura, Kenichi, Nabari, Mie 518-0495 (JP)
(74) Representative: Hedges, Martin Nicholas

(56) References cited:
- US-A- 5 267 910
- US-A- 5 453 059
- US-A- 5 628 702
- US-A- 5 846 149

## Description

The present invention relates to a silent chain formed by interlacing in the transverse and longitudinal directions a plurality of link plates each having a pair of teeth and pin apertures and connecting them by means of connecting pins, and in particular it relates to such a chain which has improved noise and oscillation characteristics.

Silent chains have been used for some time as power transmission chains in automobiles and motorcycles etc. and are generally composed by connecting a plurality of link plates each having a pair of teeth and pin apertures, by means of connecting pins inserted into each pin aperture. In such silent chains, the pitch sounds which are generated when they engage with a sprocket result in noise, and, in an attempt to reduce this pitch noise, so called random chains have been developed.

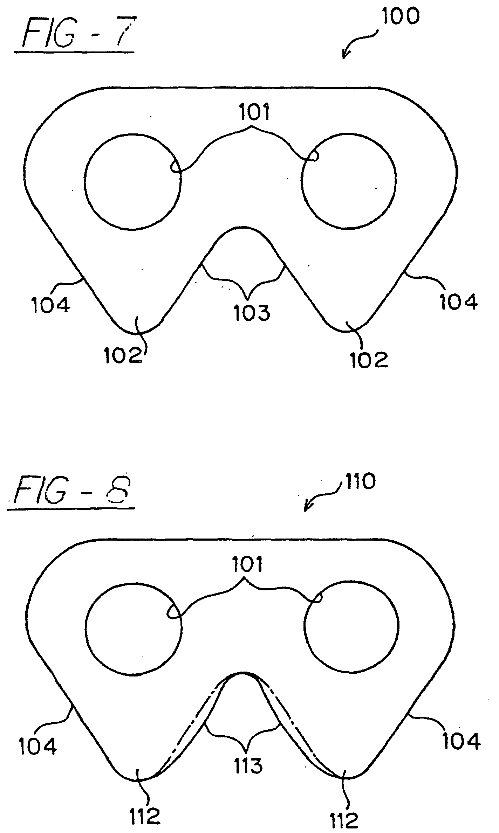

These random chains are produced by combining two types of link plate such as those shown in Fig. 7 and Fig. 8. The link plate 100 shown in Fig. 7 is a standard link plate and has a pair of pin apertures 101 and teeth 102, wherein each of the teeth 102 is composed of an inner flank surface (inner crotch) 103 and an outer flank surface (outer crotch) 104. Fig. 8 shows a random link 110 which has pin apertures 101 of the same type as in link plate 100, but the shape of each tooth 112 is different from the shape of each tooth 102 in link plate 100. Although the teeth 112 are composed of an outer flank surface 104 with a form similar to the outer flank surface 104 of link plate 100, and an inner flank surface 113 formed with a convex surface protruding further outwards than the inner flank surface 103 of link plate 100. Moreover, the dash-dot line in Fig. 8 shows the outline of the inner flank surface 103 of link plate 100.

In this case, a random chain is composed by composing a plurality of randomly selected link rows or guide rows from random links 110, and composing the other link rows or guide rows from link plates 100. During the operation of a random chain, when an inner flank surface engages with a sprocket tooth, the condition of its engagement with the sprocket tooth changes depending upon whether the link row or guide row containing said inner flank surface is composed of standard link plates 100 or of random links 110, and through this the pitch sounds which were previously periodic reduce, and the noise decreases.

However, the main purpose of the aforementioned existing random chains is to reduce noise at the beginning of engagement with a sprocket, and they cannot be described as an adequate means of reducing noise from part-way through engagement until the end of engagement (when seating occurs).

US-A-5267910, upon which the precharacterising clause of claim 1 is based, discloses a silent chain composed of a plurality of rows of link plates interleaved in the transverse and longitudinal direction, a first set of said link plates having outer flank surfaces which are linear and a second set of said link plates having a modified tooth profile with outer flank surfaces which are formed as a continuous curve. The links of the first and second sets are then irregularly interleaved in the chain.

The present invention was accomplished in light of this existing situation, and has as its object the provision of a silent chain whereby it is possible to reduce noise from part-way through engagement until the time of seating, and to improve the noise and oscillation performance. It is a further object of the present invention to provide a silent chain whereby it is possible to reduce further the noise from the beginning of engagement until the time of seating, and to improve the noise and oscillation performance.

According to the present invention there is provided a silent chain comprising: a plurality of rows of link plates interlaced in the transverse and longitudinal directions; and a plurality of pins connecting the adjacent rows of said link plates, each of said link plates having a pair of apertures for receiving said pins and a pair of teeth depending therefrom, characterised in that the outer flank surface of each of said link plates is substantially straight, link plates in a first said of said rows having rack pitches different to link plates in a second set of said rows, said first set of rows being irregularly interleaved in the longitudinal direction.

In the chain of the invention, link plates with differing rack pitches are irregularly interleaved in the chain's longitudinal direction. "Rack pitch" here refers to the distance between the two points of intersection where a parallel line drawn a specified distance away from the link plates' pin aperture centreline on the tooth side intersects both teeth's outer flank surfaces, and specifically, is set to e.g. 1.5 times the aperture pitch (the distance between pin aperture centres).

The amount of protrusion outwards of both outer flank surfaces on these link plates with differing rack pitches from the other, standard link plates, such that if the rack pitch is increased, the outer flank surfaces protrude further outwards than the other link plates, while if the rack pitch is conversely decreased, the outer flank surfaces retract further inwards than the other link plates. Hence, interleaving such link plates with differing rack pitches in the chain's longitudinal direction means that when engagement with a sprocket moves from the inner flank surface to the outer flank surface and the outer flank surface becomes seated on the sprocket tooth, the condition of seating between the outer flank surface and the sprocket tooth changes, and it is thus possible to reduce the sound pressure level from part-way through engagement until the time of seating and so to reduce noise, and it is possible to improve the noise and oscillation performance.

In one embodiment of the invention, the irregularly interleaved link plates have pin aperture centres biased in a direction perpendicular to the pin aperture centreline

The link plates with pin aperture centres biased in a direction perpendicular to the pin aperture centreline are irregularly interleaved in the chain's longitudinal direction. In this case, if link plates with biased pin aperture centres are connected by means of connecting pins with link plates with non-biased pin aperture centres, the amount of protrusion outwards of both outer flank surfaces in the link plates with biased pin aperture centres differs from that of the other, standard link plates with non-biased pin aperture centres.

Hence, when engagement with a sprocket moves from the inner flank to the outer flank surface and the outer flank surface becomes seated on the sprocket tooth, the condition of seating between the outer flank surface and the sprocket tooth changes, and it is thus possible to reduce the sound pressure level from part-way through engagement until the time of seating and so to reduce noise, and it is possible to improve the noise and oscillation performance.

Preferably, in each of the silent chains of the invention random links are irregularly interleaved in the longitudinal direction, each of said random links having a protrusion on the inside flank thereof, the amount of said protrusion of each of said random links being different from that of the protrusion of each of the link plates. In this way, not only is it possible to reduce noise from part-way through engagement until the time of seating, it is also possible to reduce noise at the beginning of engagement, and thus to reduce further noise from the beginning of engagement until the time of seating, and to improve the noise and oscillation performance.

In order that the invention may be well understood, there will now be described an embodiment thereof, given by way of example, reference being made to the accompanying drawings, in which:
Figure 1 is a partial top view of a silent chain of the invention;
Figure 2 is a partial front view of the silent chain of Figure 1;
Figure 3 is an enlarged front view of a first link plate used to form the silent chain of Figure 1;
Figure 4 is an enlarged front view of a second link plate used to form the silent chain of Figure 1;
Figure 5 is an enlarged front view of a modified form of the second link plate used to the silent chain of the invention;
Figure 6 is an enlarged front view illustrating the relative positions the second link plate of Figure 5 which interlaced with the first link plate of Figure 3;
Figure 7 is an enlarged front view of a standard link plate used in conventional silent chains; and
Figure 8 is an enlarged front view of a random link.

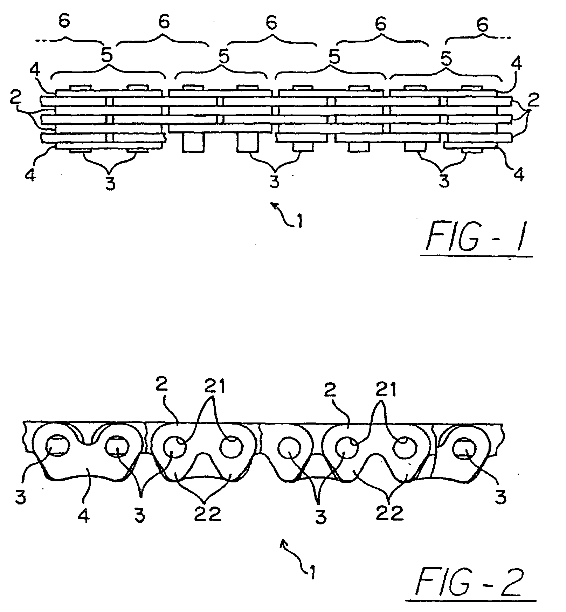

Referring first to Figures 1 and 2, there is shown a silent chain 1 formed by a plurality of link plates 2 which are interlaced in the transverse direction (vertical direction in Fig. 1) and longitudinal direction (horizontal direction in Fig. 1), said link plates 2 being interconnected by means of connecting pins 3, as well as by a plurality guide links 4 arranged on the outermost side. The silent chain 1 also includes guide rows 5 comprising link plates 2 and guide links 4, and link rows 6 comprising link plates 2 only, arranged alternately in the longitudinal direction.

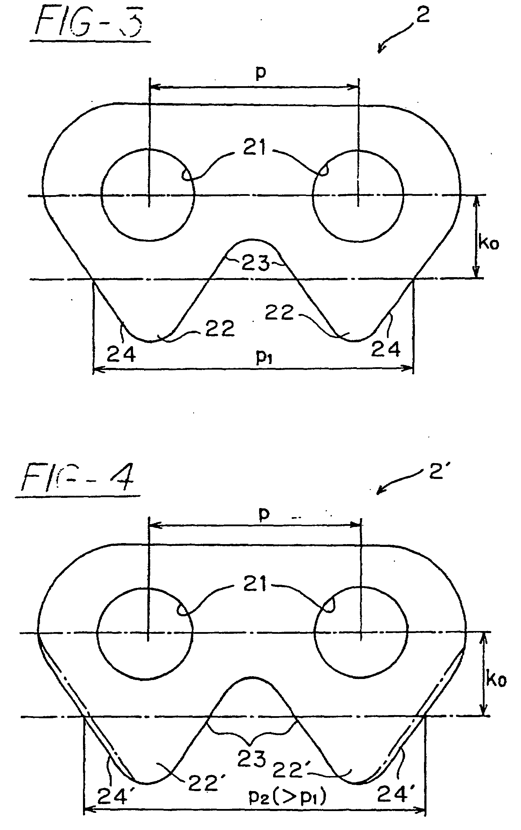

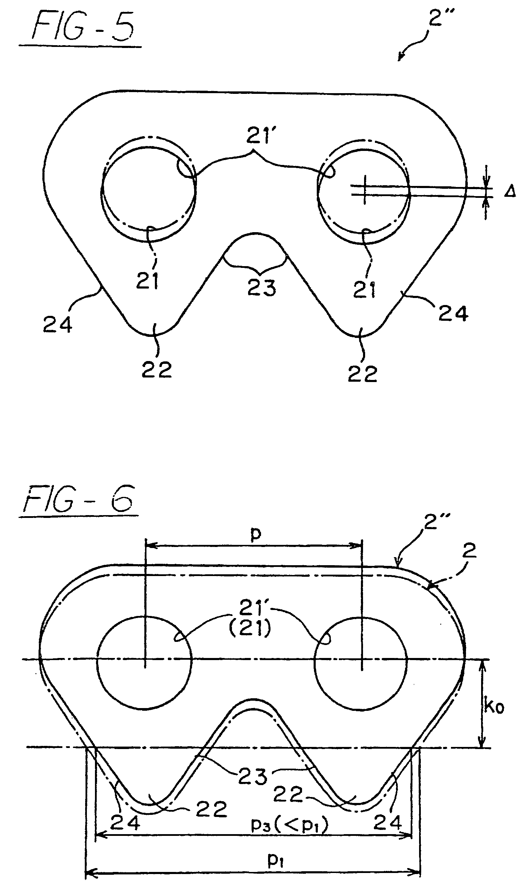

Figures 3 and 4 show the link plates which form the silent chain 1. The link plate 2 shown in Figure 3 is a standard link plate, which has a pair of pin apertures 21 and teeth 22, each tooth 22 being composed of an inner flank surface 23 and an outer flank surface 24.

The link plate 2' shown in Figure 4 has pin apertures 21 of the same type as in link plate 2, but the shape of each tooth 22' is different from the shape of each tooth 22 in link plate 2 in that each tooth 22' is composed of an inner flank surface 23 of a similar shape to the inner flank surface 23 of link plate 2, and an almost straight outer flank surface 24' which protrudes further outwards than the outer flank surface 24 of link plate 2. The dash-dot line in Figure 4 shows the outline of the outer flank surface 24 of link plate 2 to illustrate this difference in shape.

If a line is drawn parallel to the pin aperture centreline at a distance ko from the pin aperture centreline, the distances between the respective intersections of said parallel line with both outer flank surfaces 24 and 24', designated p₁ and p₂ respectively in the drawings, are the rack pitches. The value of k₀ in standard link plates is set to an appropriate value whereby e.g. p₁ becomes equal to 1.5 p (p = aperture pitch). As is evident from Figures 3 and 4, p₂ > p₁, that is the amount of protrusion of the outer flank surfaces is greater in link plate 2' than in link plate 2. In silent chain 1, the link rows 6 and/or the guide rows 5 composed of link plates 2' are arranged so as to be irregularly interleaved in the chain's longitudinal direction. Hence, in this case, when engagement with a sprocket (not shown in the drawings) moves from the inner flank surface to the outer flank surface and the outer flank surface becomes seated on the sprocket tooth, the condition of seating between the outer flank surface and the sprocket tooth changes, and it is thus possible to reduce the sound pressure level from part-way through engagement until the time of seating and so to reduce noise, and it is possible to improve the noise and oscillation performance.

Figures 5 and 6 show an example of a modified form of link plate which may be used to form the silent chain of the present invention. In Figure 5, this link plate 2" has the same general shape as the standard link plate 2 in the embodiment above, except that the position of the pin apertures is different from link plate 2, the centres of the pin apertures 21' of link plate 2" being offset by the amount Δ towards the tooth side compared with the centres of the pin apertures 21 of link plate 2. Hence, if this link plate 2" and link plate 2 are overlaid in such a way that their respective pin apertures 21 and 21' match, then their respective outlines end up in an staggered arrangement as shown in Figure 6 and the rack pitch p₃ of link plate 2" is such that p₃ < p₁ i.e. the amount of protrusion of the outer flank surfaces is greater in link plate 2 than in link plate 2".

The silent chain is formed by composing guide rows and/or link rows from such link plates 2", as well as irregularly interleaving said guide rows and/or link rows in the chain's longitudinal direction. Hence, in this case too, when engagement with a sprocket (not shown in the drawings) moves from the inner flank surface to the outer flank surface and the outer flank surface becomes seated on the sprocket tooth, the condition of seating changes, and it is thus possible to reduce the sound pressure level from part-way through engagement until the time of seating and so to reduce noise, thus improving the noise and oscillation characteristics.

The embodiment described above is an example where the outer flank surface 24' of link plate 2' is formed in such a way that p₂ > p₁, but the present invention can be applied in the same way to items where the outer flank surface of the link plate is formed such that p₂ < p₁. Also, the modified link shown in figures 5 and 6 is an example where biasing the pin aperture centres of link plate 2" towards the tooth side results in the relationship p₃ < p₁, but the present invention can conversely also be applied in a similar way to items where biasing the pin aperture centres of the link plate towards the rear surface of the link plate on the opposite side from the teeth results in the relationship p₃ > p₁.

The arrangements described above are examples in which a standard link plate is used for the inner flank surface of the link plate, but the present invention can also be applied in a similar way to items where random links are used in combination. In this case, not only is it possible to reduce noise from part-way through engagement until the time of seating, it is also possible to reduce noise at the beginning of engagement, and thus to reduce further the noise from the beginning of engagement until the time of seating, and to improve the noise and oscillation performance.

As discussed above, by utilising link plates with differing rack pitches irregularly interleaved in the chain's longitudinal direction, or link plates with pin aperture centres offset in a direction perpendicular to the pin aperture centreline irregularly interleaved in the chain's longitudinal direction, there is a benefit in that it is possible to reduce noise from part-way through engagement until the time of seating, and it is possible to improve the noise and oscillation performance.

Furthermore, using random links irregularly arranged in the longitudinal direction of the silent chain, wherein the amount of protrusion of the inner flank surfaces of the link plates is different, there is a benefit in that it is possible to reduce the noise further from the beginning of engagement until the time of seating, and thereby further improving the noise and oscillation characteristics.

## Claims

1. A silent chain comprising:
a plurality of rows of link plates (2,2',2") interlaced in the transverse and longitudinal directions; and
a plurality of pins (3) connecting the adjacent rows of said link plates (2,2',2"), each of said link plates (2,2',2") having a pair of apertures (21,21') for receiving said pins (3) and a pair of teeth (22,22') depending therefrom,
**characterised in that** the outer flank surface (24,24') of each of said link plates (2,2',2") is substantially straight, link plates (2',2") in a first said of said rows (6) having rack pitches different to link plates (2) in a second set of said rows (6), said first set of rows being irregularly interleaved in the longitudinal direction.

2. A silent chain according to claim 1, wherein the link plates (2") in said first set of rows have the centres of their pin apertures (21') offset as compared to the pin apertures (21) of the link plates (2) in said second set of rows in a direction perpendicular to the centreline of the pin apertures (21) of the link plates (2) of said second set of rows.

3. A silent chain according to claim 1 or claim 2, wherein random links (110) are irregularly interleaved in the longitudinal direction, each of said random links (110) having a protrusion (113) on the inside flank thereof, the amount of said protrusion (113) of each of said random links (110) being different from that of the protrusion of each of the link plates.

## Patentansprüche

1. Zahnkette mit:
mehreren Reihen von Gliederplatten (2, 2', 2"), die in Querrichtung und Längsrichtung abwechselnd zueinander angeordnet sind, und
mehreren Zapfen (3), die benachbarte Reihen der Gliederplatten (2, 2', 2") verbinden, wobei jede der Gliederplatten (2, 2', 2") zwei Öffnungen (21, 21') zur Aufnahme der Zapfen (3) und zwei davon abgehende Zähne (22, 22') aufweist,
**dadurch gekennzeichnet, dass** die äußere Flankenfläche (24, 24') jeder der Gliederplatten (2, 2', 2") im wesentlichen geradlinig ist, wobei die Gliederplatten (2', 2 ") in einer ersten Gruppe der Reihen (6) Zahnteilungen haben, die verschieden von denen der Gliederplatten (2) in einer zweiten Gruppe der Reihen (6) sind, wobei die erste Gruppe von Reihen unregelmäßig in Längsrichtung abwechselnd angeordnet sind.

2. Zahnkette nach Anspruch 1, bei der die Gliederplatten (2 ") in der ersten Gruppe von Reihen mit den Mittelpunkten ihrer Zapfenöffnungen (21') versetzt angeordnet sind im Vergleich zu den Zapfenöffnungen (21) der Gliederplatten (2) in der zweiten Gruppe von Reihen in einer Richtung senkrecht zu der Mittellinie der Zapfenöffnungen (21) der Gliederplatten (2) der zweiten Gruppe von Reihen.

3. Zahnkette nach Anspruch 1 oder 2, bei der Zufallsglieder (110) in der Längsrichtung unregelmäßig abwechselnd angeordnet sind, wobei jede der Zufallsglieder (110) einen Vorsprung (113) an seiner Innenseitenflanke hat, wobei die Größe des Vorsprungs (113) jeder der Zufallsglieder (110) verschieden ist von derjenigen des Vorsprungs jeder der Gliederplatten.

## Revendications

1. Une chaîne à dents comprenant :
une pluralité de plaquettes de maillons (2, 2', 2") entrelacées dans les directions transversale et longitudinale ; et
une pluralité d'axes (3) reliant les rangées adjacentes desdites plaquettes de maillons (2, 2', 2"), chacune desdites plaquettes de maillons (2, 2', 2") ayant une paire d'ouvertures (21, 21') pour recevoir lesdits axes (3) et une paire de dents (22, 22') qui en pendent,
**caractérisée en ce que** la surface de flanc extérieur (24, 24') de chacune desdites plaquettes de maillons (2, 2', 2") est essentiellement rectiligne, les plaquettes de maillons (2', 2") dans un premier jeu desdites rangées (6) ayant un pas de crémaillère différent des plaquettes de maillons (2) dans un second jeu desdites rangées (6), les rangées du premier jeu étant irrégulièrement entrelacées dans la direction longitudinale.

2. Une chaîne à dents selon la revendication 1, dans laquelle les plaquettes de maillons (2") dans ledit premier jeu de rangées ont les centres de leurs ouvertures d'axes (21') décalés par rapport aux ouvertures d'axes (21) des plaquettes de maillons (2) dudit second jeu de rangées dans une direction perpendiculaire à la ligne centrale des ouvertures d'axes (21) des plaquettes de maillons (2) dudit second jeu de rangées.

3. Une chaîne à dents selon la revendication 1 ou la revendication 2, dans laquelle des maillons aléatoires libres (110) sont irrégulièrement entrelacés dans la direction longitudinale, chacun desdits maillons aléatoires libres (110) ayant une saillie (113) sur son flanc intérieur, la quantité de ladite saillie (113) de chacun desdits maillons aléatoires libres (110) étant différente de celle de la saillie de chacune des plaquettes de maillons.
